# EUROPEAN PATENT APPLICATION

(11) **EP 0 933 943 A2**
(43) Date of publication of application: **04.08.1999**
(21) Application number: 99101352.5
(22) Date of filing: 26.01.1999
(51) Int. Cl.: H04N 7/26

(54) **Digital signal processing**

(30) Priority: 03.02.1998 GB 9802233
(71) Applicant: NDS LIMITED, West Drayton, Middlesex UB7 ODQ (GB)
(72) Inventor: Davies, Colin, Hale, Fordingbridge, Hampshire SP6 2NS (GB)
(74) Representative: Stoakes, Rosemarie Clare

(57) **Abstract**

According the present invention there is provided apparatus for matching a plurality of functions to a digital signal so as to represent the digital signal in terms of said functions comprising a first processor for determining one or more common factors in the plurality of functions; and means for representing at least some of the functions in terms of one or more others of said functions thereby to reduce the amount of processing necessary for the matching.

This has the advantage that there is no unnecessary processing to determine the basis functions. Where there is commonality and the process would require less processing potential to make use of this than not then the commonality is exploited.

## Description

This invention relates to improvements in or relating to the processing of digital signals, for example broadcast digital signals.

Broadcasting of digital signals is now a well-established technology. Information in the digital domain can undergo a number of signal processing processes which essentially compress the amount of data that needs to be transmitted. For example in Digital Television it is possible to compress the signal such that less than 1% of the required information needs to be transmitted. This means that many Digital Television channels can be transmitted in the same bandwidth that would previously be used for only one analogue television channel.

There are a number of well-known techniques for compressing digital data; these include the MPEG II standard for digital compression and wavelet compression techniques. A problem that exists with this type of signal processing is to find a numerical representation of signals that is well suited for performing the processes of coding, noise removal, feature enhancement or pattern recognition. It is desirable to decompose the signals into basis elements that are locally adapted to the signal structures and frequency content. The classical methods identified above build signal representations with linear transforms. These transforms build signal representations that are not adapted to the local signal properties.

Matching Pursuits is an alternative method of decomposing a signal into elementary structures that are locally adapted to the local signal properties. Matching Pursuits has excellent performance when compared with other compression techniques. Matching Pursuits performs signal analysis using an arbitrary over-complete dictionary set of basis waveforms. With a complete set of basis waveforms it is possible to completely represent a given signal by a unique linear combination of the waveforms. With an over-complete basis set there may be many different combinations of the basis waveforms which can represent the same given signal. This means that the most appropriate representation can be chosen for different circumstances.

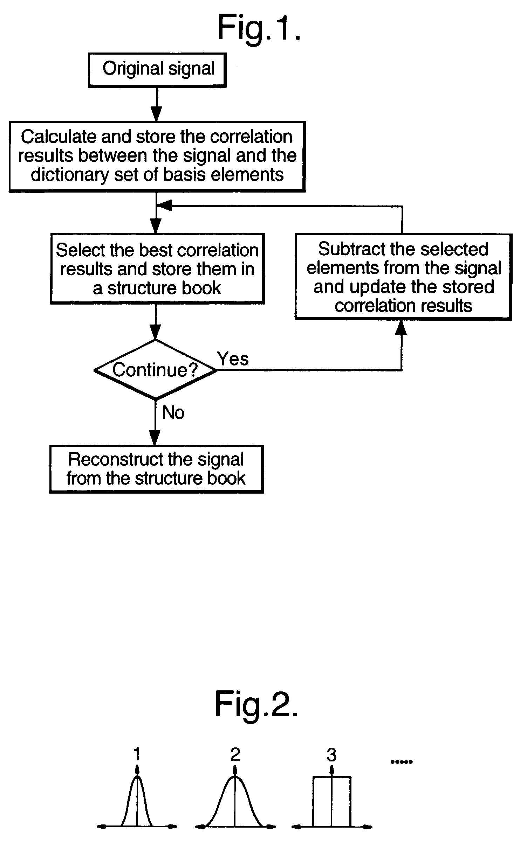

The Matching Pursuits process of decomposing a signal with the elementary structures of the dictionary basis set is shown in the block diagram of Figure1 and described by the steps below.
1. The algorithm initialises by calculating and storing the correlation results between the signal and the dictionary set of basis waveforms.
2. The data for one or more of the best correlation results is stored in a structure codebook.
3. A decision is made as to whether to continue coding. For compression purposes this may be based on whether a given bit budget has been reached.
4. If the decision is yes then the selected correlation elements of step 2 are subtracted from the original signal and the stored correlation results are updated. The process then loops back to step 2.
5. If the decision is no then the signal can be reconstructed from the stored structure book.

For a typical signal compression system the stored Matching Pursuits structure book will be efficiently coded and stored or transmitted to a decoder.

Figure 2 shows some waveforms (1, 2 and 3) from an example one-dimensional basis dictionary (not shown) for analysis of a time varying signal. In the one-dimensional basis dictionary the waveforms can be located anywhere in time.

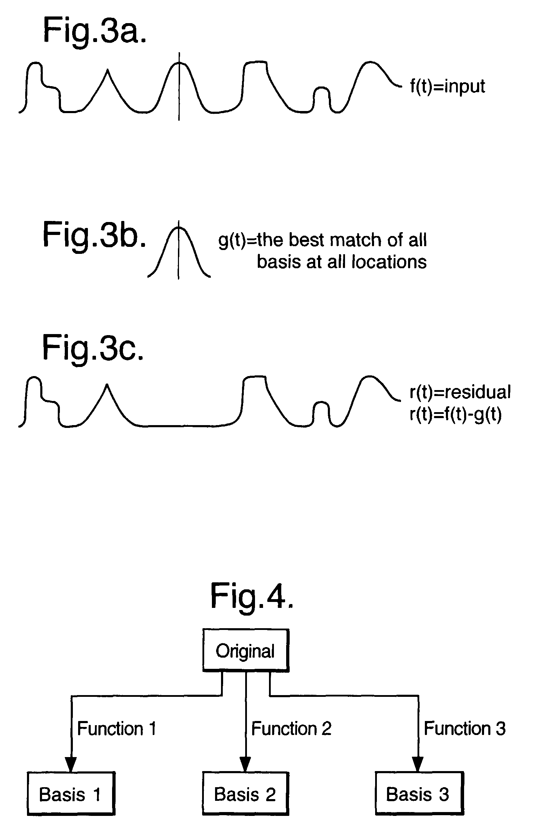

Application of the example dictionary set to an example function f(t) is shown in Figure 3a. After correlating the signal and the dictionary set of basis waveforms the best match correlation g(t) shown in Figure 2 is chosen (Figure 3b). The correlation coefficient, basis waveform and location in time are stored in the structure codebook. The stored element is subtracted from the original signal to generate the residual r(t) shown in Figure 3c. The process iterates by finding the best correlation result of the residual signal and the dictionary set of basis waveforms.

It is desirable to be able to model and represent multi-dimensional data by sets of multi-dimensional basis functions because a multi-dimensional basis function may provide a better correlation than one-dimensional functions.

For speed of implementation and convenience of design, the multi-dimensional basis functions may be selected to be separable into one dimensional basis functions in orthogonal directions. The representation of the multi-dimensional data can then be treated as a series of one-dimensional problems.

There are problems associated with Matching Pursuits techniques. In particular, Matching Pursuits requires the iterated correlation of an over complete set of basis functions with the signal. The calculation of the correlation results is computationally very expensive making the analysis of large signals, such as video, computationally intractable in real time.

Accordingly, one object of the present invention is to provide a means by which the advantages of Matching Pursuits can be exploited without excessive computational effort.

According to one aspect of the present invention there is provided a method of matching a plurality of functions to a digital signal so as to represent the digital signal in terms of said functions comprising the steps of: determining one or more common factors in the plurality of functions; representing at least some of the functions in terms of one or more others of said functions thereby to reduce the amount of processing necessary for the matching.

According to a second aspect of the present invention there is provided apparatus for matching a plurality of functions to a digital signal so as to represent the digital signal in terms of said functions comprising a first processor for determining one or more common factors in the plurality of functions; and means for representing at least some of the functions in terms of one or more others of said functions thereby to reduce the amount of processing necessary for the matching.

This has the advantage that there is no unnecessary processing to determine the basis functions. Where commonality exists between basis functions then utilisation of this commonality reduces the processing power required during the matching process. This invention exploits commonality of basis functions.

Reference will now be made, by way of example, to the accompanying drawings, in which:
Figure 1 is a prior art block diagram illustrating signal decomposition using Matching Pursuits;
Figure 2 is a diagram showing example elements from a one dimensional basis dictionary for analysis of time varying signals for use in the Matching Pursuits technique in Figure 1;
Figure 3 is a visualisation of the first iteration of Matching Pursuits encoding of an example signal using the basis dictionary set of Figure 2;
Figure 4 is a flow diagram for the calculation of the original Matching Pursuits correlation coefficients for three waveforms from an over complete set;
Figure 5 is a visual representation of an example over complete dictionary set of separable two dimensional waveforms basis function as a separable two dimensional set;
Figure 6 is a diagram of an example of functions created by the correlation of other functions to facilitate the linked functions of the present invention;
Figure 7 is a flow diagram for the calculation of Matching Pursuits correlation coefficients according to the present invention; and
Figure 8 is a more complex example of determining linked basis functions.

In conventional Matching Pursuits the correlation coefficients at a given location in the signal for each basis function are calculated independently.

Comparing the basis function with a signal at a number of locations carries out the correlation. The number of locations being dependant on the length of the function. For example if the function has a length of 10 units there will need be 10 multiplications and additions to determine the correlation coefficient, for a length of 20 units, 20 multiplications and additions will be needed and so on.

The simplified flow diagram for the correlation calculation is shown in Figure 4. From this it is clear that each correlation is carried out completely independently which can be very costly on computational power.

The computation required for correlation can be considered with some example one dimensional functions namely function 1, function 2 and function 3. Assuming function 1 has a length 10, function 2 has a length 20 and function 3 has a length 30, then the calculation of the three correlation coefficients at a given location in the original signal will require 10 + 20 + 30 = 60 multiplications and additions.

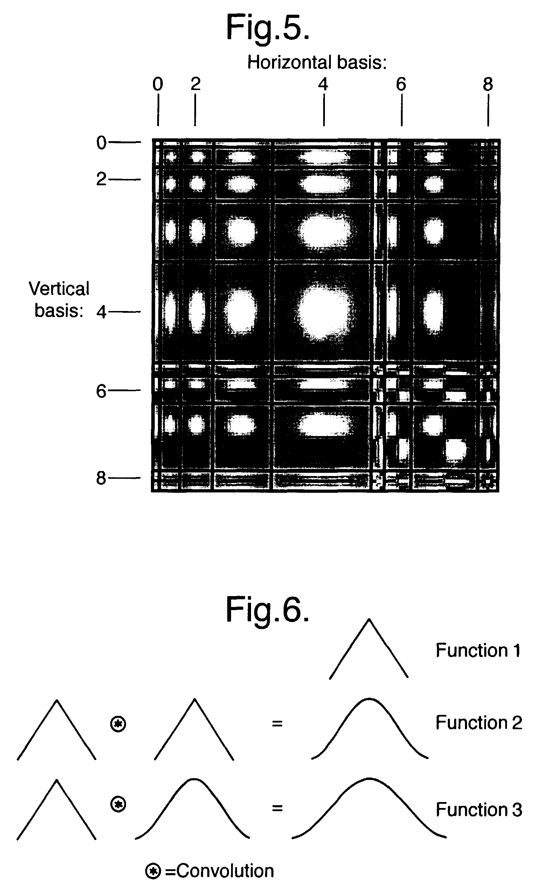

Figure 5 shows a typical dictionary set of separable two dimensional functions used in Matching Pursuits. It can be seen that these functions are represented as a plurality of optical features some of which are texture features, some edge features and some shape features. Each of the features can be separated into one dimensional functions in two orthogonal directions. Examples of such one dimensional functions are shown in the prior art figure 2. It will be clear that each feature in figure 5 can be represented in a similar manner.

An important aspect of the present invention is the realisation that many of the one dimensional functions are very linked to others. For example, some are mirror images of each other (in one or other axis), some are merely larger than others, some are translations of others et cetera. With this realisation it has been possible to move from an entirely random generation of a dictionary set (which is computationally impossible to handle in real time) to a designed dictionary set which requires considerably less computational effort.

The realisation is that many of the functions have common features or are linked in some way for example are similar shape but a different size or whatever. This realisation can be utilised to simplify certain functions which have common or linked features with one or more of the other functions. This can be achieved since the certain function can be represented as an operation of the one or more other functions. The operation is dependent on the linkage or commonality of the function. In many circumstances this would mean that less computational effort is used than would be the case for carrying out the normal Matching Pursuits process for a given feature. This will be described in greater detail below.

As previously indicated functions can be represented perfectly or approximated well by linking them with one or more other functions. Figure 6 shows some example functions created by the repeated correlations of short functions. Function 2 is the result of correlating function 1 with itself. Function 3 is the result of correlating function 1 and function 2. Thus the long functions can be considered as linked to the shorter functions in some predetermined manner.

With knowledge of this it is possible to determine whether it is better, in terms of computational effort, to represent a function as itself or as linked to one or more other less complex functions.

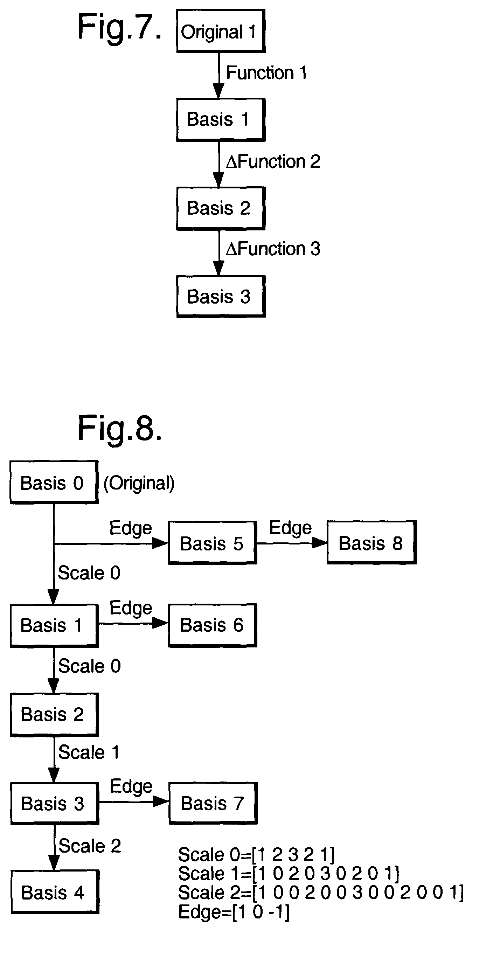

Figure 7 shows the flow diagram for the Matching Pursuits correlation calculation equivalent to that shown in figure 4, but using linked or common basis functions. The function used to form basis 2, function 2, is the result of correlating function 1 with Δfunction 2. The correlation coefficients for function 2 with the original signal are calculated by correlating Δfunction 2 with the stored results of basis 1. The function used to form basis 3, function 3, is the result of correlating function 2 with Δfunction 3. The correlation coefficients for function 3 with the original signal are calculated by correlating Δfunction 3 with the stored results of basis 2.

The computation required for this correlation can be considered with the same size one dimensional functions as before. Function 1 has length 10, function 2 has length 20 and function 3 has length 30. This means that for the link function for Δfunction 2 has length 11 and for Δfunction 3 has length 11. Thus the calculation of the three correlation coefficients at a given location in the original signal using the link functions will require 10 + 11 + 11 = 32 multiplications and additions.

The example has demonstrated how using linked basis functions the correlation computation can be significantly reduced as compared to normal basis functions. When using more linked basis functions the computation savings will be even greater.

In real applications of Matching Pursuits there may be requirements for basis functions that are not fully realisable using the linked functions described above. In such circumstances a combination of normal and linked basis functions may be used, allowing the computational advantages of the linked basis to be realised where possible.

The above mentioned process may be of particular use in the efficient coding of the motion estimation residuals in video compression.

There now follows a description of a more complicated linked basis function of the Matching Pursuits.

Figure 8 shows a more complicated example of the application of linked basis functions. The short functions (scale 0, scale 1, scale 2 and edge) that are linked to create the nine basis functions have their coefficients detailed in the table shown in Figure 8. Starting from the original signal (basis0) the function scale 0 is applied to produce the basis 1 results. The function edge is applied to the basis 1 results to produce the basis 6 results. Similarly the function scale 0 applied to the basis 1 results produces the basis 2 results and so on. Thus the common factors or features of the desired basis can be exploited to reduce the computation e.g.: the basis 1 results are a common factor of both basis 6 and basis 2.

It should be noted that of the short functions scale 0, scale 1, scale 2 and edge only the non-zero coefficients are used in the correlation calculations. Thus correlation of scale 2 only requires five multiplications and additions.

Linking the short basis creates successively longer basis functions e.g.: basis 4 of Figure 8 is longer than basis 3. The resulting basis functions created by the flow and short functions of Figure 8 are visualised in Figure 5 as the two dimensional separable functions created by combination of the nine one dimensional basis functions.

In application the coefficients of each basis are normalised such that the correlation of a basis with itself produces a correlation coefficient of one.

It will be appreciated that there are many ways in which the present process may be carried out and still remain within the scope of the invention. The most important concept in the identification of the fact that there are many functions in a signal which can be represented as an operation of a more simple function. This is particularly important where the function is very complicated and/or does not occur very often.

## Claims

1. A method of matching a plurality of functions to a digital signal so as to represent the digital signal in terms of said functions comprising the steps of:
determining one or more common factors in the plurality of functions;
representing at least some of the functions in terms of one or more others of said functions thereby to reduce the amount of processing necessary for the matching.

2. The method of claim 1, further comprising determining a first function for a section of the digital signal; and further determining a further function from the first function.

3. The method of claim 2, wherein the step of determining the first function comprises correlating the section of the signal with one of the plurality of basis functions to produce a correlation coefficient.

4. The method of claim 3, wherein the further determining step comprises calculating the further function from the correlation coefficient and a variable which indicates the difference between the first and further functions.

5. The method of claim 4, further comprising providing the variable as an indicator of difference in size, shape, position and/or relative orientation.

6. The method of any of claims 1 to 5, further comprising providing the digital signal as a digital video signal.

7. The method of any of claims 1 to 6, further comprising applying the method to the task of digital compression such that the digital signal is compressed prior to transmission.

8. The method of any of claims 1 to 7, further comprising analysing the processing required to determine the further function and choosing either to determine the further function from the first function or to determine the further function independently from the plurality of basis functions dependant on which needs the least amount of processing capacity.

9. Apparatus for matching a plurality of functions to a digital signal so as to represent the digital signal in terms of said functions comprising:
a first processor for determining one or more common factors in the plurality of functions; and
means for representing at least some of the functions in terms of one or more others of said functions thereby to reduce the amount of processing necessary for the matching.

10. Apparatus according to claim 9, further comprising a second processor for determining a first function for a section of the digital signal; and a third processor for determining a further function from the first function.

11. The apparatus of claim 10, wherein the second processor comprises a correlator for correlating the section of the signal with one of the plurality of basis functions to produce a correlation coefficient.

12. The apparatus of claim 11, wherein the third processor calculates the further function from the correlation coefficient and a variable which indicates the difference between the first and further functions.

13. The apparatus of claim 12, wherein the variable is an indicator of difference in size, shape, position and/or relative orientation of the first and further function.

14. The apparatus of any of claims 9 to 13, wherein the digital signal is a digital video signal.

15. The apparatus of any of claims 9 to 14, for use in the task of digital compression such that the digital signal is compressed prior to transmission.

16. The apparatus of any of claims 9 to 15, further comprising an analyser for analysing the processing required to determine the further function and choosing either to determine the further function from the first function or to determine the further function independently from the plurality of basis functions dependant on which needs the least amount of processing capacity.
